# EUROPEAN PATENT APPLICATION

(11) **EP 2 248 642 A1**
(43) Date of publication of application: **10.11.2010**
(21) Application number: 09735075.5
(22) Date of filing: 20.02.2009
(51) Int. Cl.: B27B 5/29, B23D 45/04

(54) **JIG FOR BENCH CIRCULAR SAW MACHINE AND BENCH CIRCULAR SAW MACHINE**

(30) Priority: 21.04.2008 JP 2008110579; 22.08.2008 JP 2008214410
(71) Applicant: Makita Corporation, Anjo-shi, Aichi 446-8502 (JP)
(72) Inventor: SHIBATA, Yoshinori, Anjo-shi Aichi 446-8502 (JP); AOYAMA, Syuji, Anjo-shi Aichi 446-8502 (JP)
(74) Representative: Kramer - Barske - Schmidtchen
(86) International application number: PCT/JP2009/053044
(87) International publication number: WO 2009/130938

(57) **Abstract**

A stopper is usable without requiring time and a complicated operation. A jig for a mitre circular sawing machine (30) includes a holder (31) attached to a side surface of a base (2) of a mitre circular sawing machine (1), and a work support (32) configured to be connected to the holder (31), and in a state in which the holder (31) is attached to the base (2), to be movable between a stopper plate position where the work support (32) is placed on the base (2) and an upper surface of the work support (32) becomes parallel to an upper surface of the base (2) and a retreating position where the work support (32) retreats outside the base (2).

## Description

### TECHNICAL FIELD

The present invention relates to a jig for a mitre circular sawing machine, which is used during the operation of the mitre circular sawing machine, and a mitre circular sawing machine having a saw blade for cutting a workpiece placed on a base by lowering the saw blade from an upper position to a lower position.

### BACKGROUND ART

As disclosed in Patent Document 1, a mitre circular sawing machine comprises a base, a main body having a motor-driven rotatable saw blade and disposed above the base in such a manner as to be movable in an up-and-down direction, and a guide fence provided on the base, and while a workpiece is pressed and positioned against the guide fence, the main body is lowered to cut the workpiece using the saw blade. Particularly, in this Patent Document 1, the main body is slidably retained by a distal end of an arm that protrudes from a rear portion of the base so that the main body can be slid in a front-and-rear direction and a workpiece having a large size in the front-and-rear direction can also be cut by sliding the main body in the front-and-rear direction.

According to this mitre circular sawing machine, in order to cut a workpiece having a large width in the front-and-rear direction or a workpiece having a small thickness, a stopper may be used. For example, an auxiliary rule such as disclosed in Patent Document 2 is set on the base and under the workpiece to support the workpiece above the upper surface of the base. This makes it possible to cut the workpiece by the saw blade using a portion near the center of the saw blade. Patent Document 1: Japanese Patent No. 3193225
Patent Document 2: Japanese Utility Model Publication No. 63-53621

### DISCLOSURE OF INVENTION

### Problems to be solved by the invention

However, since this auxiliary rule is fixed to the guide fence by screws, it is necessary to attach or detach the auxiliary rule to or from the guide fence whenever the auxiliary rule is used or unused. This impairs the usability. Further, since the auxiliary rule is provided discretely from the mitre circular sawing machine, a storage of the auxiliary rule is necessary and there may be a possibility to lose the auxiliary rule.

In view of this, the present invention seeks to provide a jig for a mitre circular sawing machine, which can be used as a stopper without requiring time and a complicated operation and excel in the usability. The present invention also seeks to provide a mitre circular sawing machine, which can simply provide a stopper function when necessary for a better usability and unnecessitate the storage of a stopper and thus the stopper would not be lost.

### Means for solving the problems

In order to achieve the above object, the invention as described in claim 1 is a jig for a mitre circular sawing machine comprising: an attachment member configured to be attached to a side surface of a base of the mitre circular sawing machine; and a stopper plate configured to be connected to the attachment member, and in a state in which the attachment member is attached to the base, to be movable between a stopper plate position where the stopper plate is placed on the base and an upper surface of the stopper plate comes to be parallel to an upper surface of the base and a retreating position where the stopper plate retreats outside the base.

Further, in order to maintain a highly accurate cutting when using the stopper plate, the invention as described in claim 2 is the jig according to claim 1, wherein there is provided an auxiliary stopper plate is provided being configured such that an upper surface thereof lies flush with the upper surface of the stopper plate in the stopper plate position, and wherein the auxiliary stopper plate is connected to the stopper plate in such a manner as to be movable between an adjacent position where the auxiliary stopper plate is adjacent to the stopper plate and a protruding position where the auxiliary stopper plate is away from the stopper plate.

In order to maintain a better cutting accuracy during a mitered cut, the invention as described in claim 3 is the jig according to claim 2, wherein the auxiliary stopper plate is provided with an engagement portion engageable with an upper surface of a turntable which is horizontally rotatably mounted on the base so that the auxiliary stopper plate is movable by following a rotation of the turntable.

In order to use the stopper plate for supporting a workpiece outside the base, the invention as described in claim 4 is the jig according to any one of claims 1 to 3, wherein the stopper plate outside the base is configured such that in the retreating position, the upper surface of the stopper plate lies flush with the upper surface of the base.

In order to improve the usability of the stopper plate, the invention as described in claim 5 is the jig according to claim 4, wherein the attachment member is horizontally attached to the side surface of the base such that the upper surface of the attachment member is positioned lower than the upper surface of the base by a thickness of the stopper plate, and wherein in the retreating position, the stopper plate is set on the attachment member so that the upper surface of the stopper plate lies flush with the upper surface of the base.

In order to accurately align the upper surface of the stopper plate in the retreating position with the upper surface of the base, the invention as disclosed in claim 6 is the jig according to claim 5, wherein an adjusting screw is threadedly engaged with the attachment member so that the stopper plate in the retreating position is brought into contact with the adjusting screw to thereby adjust a height of the stopper plate.

In order to achieve the above object, the invention as described in claim 10 is a mitre circular sawing machine comprising: a base; a main body disposed above the base in such a manner as to be movable in an up-and-down direction and having a motor-driven rotatable saw blade; and a jig for a mitre circular sawing machine according to claim 1, wherein the jig is attached to at least one of right and left side surfaces of the base.

In order to achieve the above object, the invention as described in claim 11 is a mitre circular sawing machine comprising: a base; a main body having a motor-driven rotatable saw blade and disposed above the base in such a manner as to be movable in an up-and-down direction so that a workpiece set on the base can be cut by lowering the main body; and an auxiliary base provided on the base and operable to move from a lowered position where an upper surface of the auxiliary base parallel to the upper surface of the base is positioned equal to or lower than the upper surface of the base to a protruding position where the upper surface of the auxiliary base is positioned above the upper surface of the base.

Further, the invention as described in claim 12 is the mitre circular sawing machine according to claim 11, wherein the base is provided with a stopper mechanism capable of retaining the auxiliary base in the protruding position.

In order to further improve the usability, the invention as disclosed in claim 13 is the mitre circular sawing machine according to claim 11 or 12, wherein the auxiliary base comprises a rod configured to be movable in an up-and-down direction as well as rotatable within a recessed portion formed on the base, and a swing arm having one end connected to an upper end of the rod such that in the lowered position, an upper surface of the swing arm lies flush with the upper surface of the base within the recessed portion, whereas in the protruding position, the upper surface of the swing arm is positioned above the upper surface of the base.

In order to more stably support the workpiece above the base, the invention as described in claim 14 is the mitre circular sawing machine according to claim 11 or 12, wherein a guide fence for positioning a workpiece is provided on the base and extending across the base in a right-and-left direction, and wherein the guide fence includes a stepped portion having an upper surface that lies flush with the upper surface of the auxiliary base in the protruding position, so that the workpiece can be placed on the auxiliary base and the stepped portion bridging the base.

Herein, the term "base" as recited in claim 11 also includes a turn base (also referred to as a turntable) rotatably provided on the base for a mitered cut.

### Effects of the invention

According to the inventions as described in claims 1 and 10, the stopper plate of the jig for a mitre circular sawing machine can be used as a stopper without requiring time and a complicated operation. Further, since whether the stopper plate is used or unused can be chosen while the stopper plate is kept attached to the base, the stopper plate would not be lost and thus excels in the usability.

According to the invention as described in claim 2, in addition to the advantageous effects of claim 1, it is possible to support a workpiece using the auxiliary stopper plate at a position closer to the saw blade. Therefore, a high cutting accuracy can be maintained even when the stopper plate is used.

According to the invention as described in claim 3, in addition to the advantageous effects of claim 2, it is possible to support a workpiece by the auxiliary stopper plate during a mitered cut without changing the position with respect to the saw blade. This can maintain a better cutting accuracy.

According to the invention as described in claim 4, in addition to the advantageous effects of any one of claims 1 to 3, the stopper plate can be used for supporting a workpiece outside the base. Therefore, if the workpiece is elongated to such an extent that it protrudes from the base, the workpiece can be reliably positioned using the stopper plate.

According to the invention as described in claim 5, in addition to the advantageous effects of claim 4, the stopper plate having moved into the retreating position is automatically set to the same height as the base and can support a workpiece. This can improve the usability.

According to the invention as described in claim 6, in addition to the advantageous effects of claim 5, it is possible to accurately align the upper surface of the stopper plate in the retreating position with the upper surface of the base.

According to the invention as disclosed in claim 11, the stopper function can be easily obtained where necessary using the auxiliary base. This can lead to a better usability. Further, since there is no need for detaching the auxiliary base, it is unnecessary to store the auxiliary base and thus the auxiliary base would not be lost.

According to the invention as described in claim 12, in addition to the advantageous effects of claim 11, the stopper mechanism can reliably retain the auxiliary base in the protruding position.

According to the invention as described in claim 13, in addition to the advantageous effects of claim 11 or 12, the swing arm can be rotated in an arbitrary orientation in accordance with the shape or size of a workpiece to thereby stably support the workpiece. This can further improve the usability.

According to the invention as described in claim 14, in addition to the advantageous effects of claim 11 or 12, it is possible to more stably support a workpiece above the base using the guide fence.

### BEST MODE FOR CARRYING OUT THE INVENTION

Embodiments of the present invention will be described hereinafter with reference to the accompanying drawings.

### [First Embodiment]

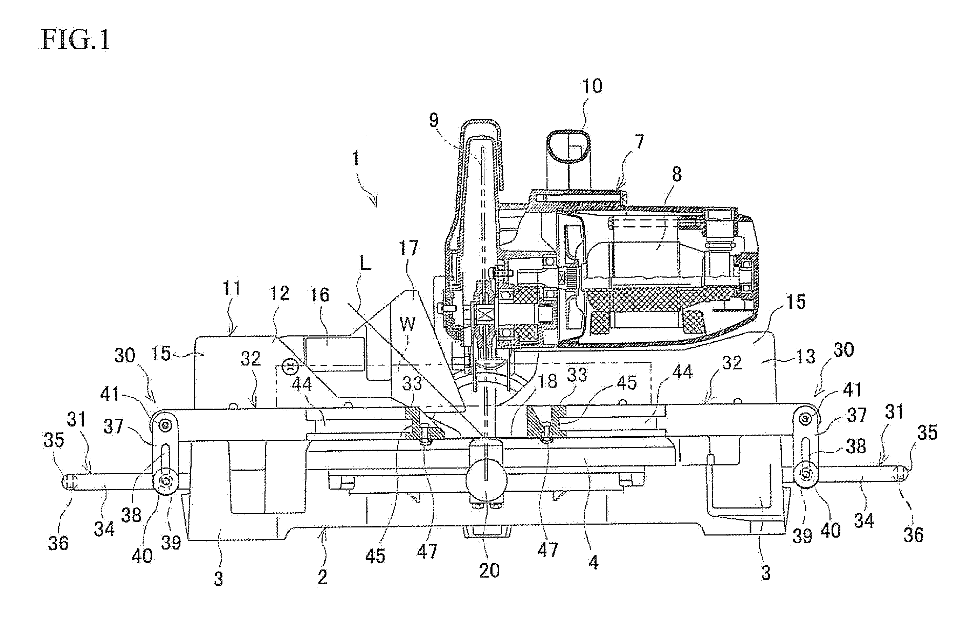

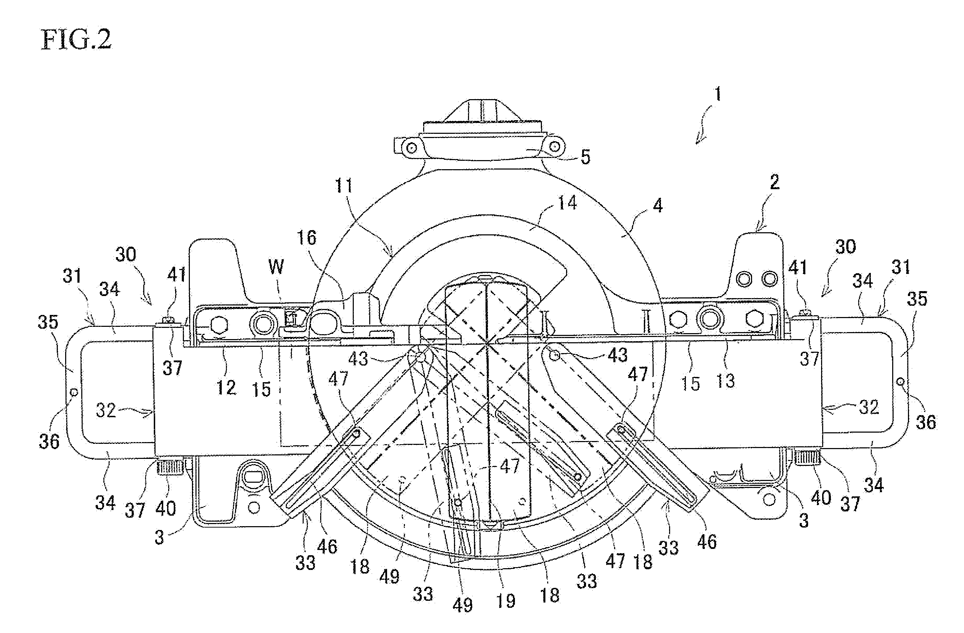

FIG. 1 is a front view of a mitre circular sawing machine using a jig for the mitre circular sawing machine according to the present invention, and FIG. 2 is a top view of the mitre circular sawing machine with a main body thereof being omitted.

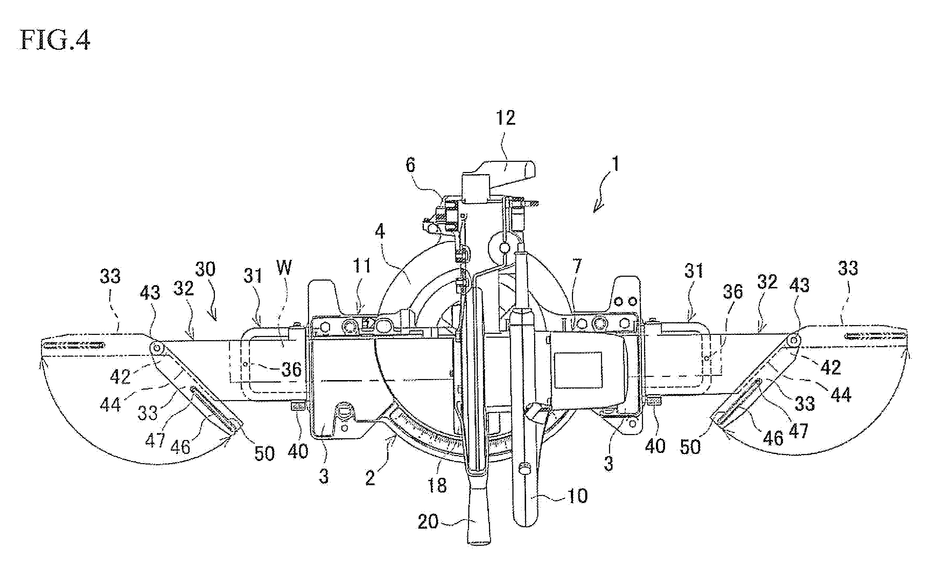

A mitre circular sawing machine 1 has a base 2, and a turntable 4 is placed at a center of the base 2 in such a manner as to be horizontally rotatable with respect to the base 2. Provided at a rear (i.e., upper side of FIG. 2) of the turntable 4 is a connecting member 5, to which a lower end of an arm 6 (shown in FIG. 4) is connected such that the arm 6 is tiltable to a left side. A main body 7 is axially supported on an upper end of the arm 6 in such a manner as to be movable in an up-and-down direction. The main body 7 has a disc-shaped saw blade 9 that is driven to rotate by a motor 8 disposed in a right side of the main body 7 and that extends in a front-and-rear direction. In a normal state, the main body 7 is urged toward an upper limit position by a coil spring (not shown) provided at a connecting portion between the arm 6 and the main body 7. The reference number 10 indicates a handle for manipulating the main body 7 in the up-and-down direction.

The reference number 11 indicates a guide fence provided on the turntable 4 and extending across the turntable 4 in the right-and-left direction. The guide fence 11 comprises left and right fences 12, 13 fixed by bolts to both side portions 3, 3 of the base 2 which are positioned at right and left sides of the turntable 4 and lie in the same plane, and an arc-shaped detouring portion 14 for connecting the left fence 12 and the right fence 13 on the turntable 4 at end portions of the left and right fences 12, 13 closer to the center of the turntable 4. It is noted that each of the left and right fences 12, 13 has at its front side a guide surface 15 that is perpendicular to the upper surfaces of the turntable 4 and the upper surfaces of the side portions 3, and the right fence 13 provides a cutout at its upper end to avoid interference with the main body 7 when lowering the main body 7, whereas the left fence 12 provides a large cutout at its center side to avoid interference with the main body 7 when tilting the main body 7 at the maximum angle (45 degrees) (i.e., line L of FIG. 1 indicates the position of the tilted saw blade 9).

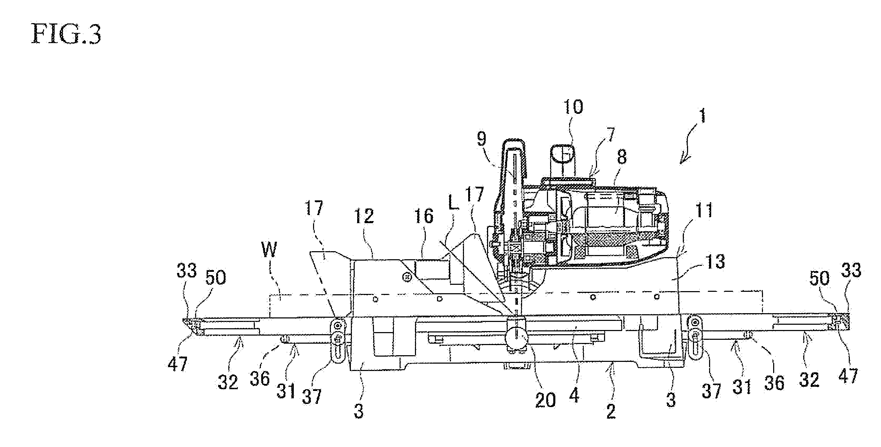

An auxiliary fence 16 is rotatably connected at its proximal end to the left fence 12, and a distal end of the auxiliary fence 16 forms an auxiliary guide surface 17 which lies flush with the guide surface 15. Therefore, when the main body 7 is not tilted, as shown by the solid line, the auxiliary guide surface 17 is positioned into the center-side position, and when the main body 7 is tilted, as shown by the two-dot chain line in FIG. 3, the auxiliary guide surface 17 is positioned outside the left fence 12 to thereby ensure the guide surface at the left side of the saw blade 9.

The turntable 4 has a blade edge plate 18 in which a slit 19 is formed in the radial direction of the turntable 4 for allowing the saw blade 9 to penetrate therethrough. By operating a manipulation handle 20 that protrudes forward from the mitre circular sawing machine 1, the turntable 4 is horizontally rotatable within a range from a position where the slit 19 becomes orthogonal to the guide surface 15 of the guide fence 11 to right and left positions such as shown in FIG. 2 where the slit 19 forms an angle of 45 degrees.

Accordingly, when an operator holds the manipulation handle 20 and horizontally rotates the turntable 4, the main body 7 also rotates in the horizontal direction by following the rotation of the turntable 4. This can change the angle of the saw blade 9 from a direction where the saw blade 9 forms the right angle with respect to the guide surface 15 to a tilted position, so that a mitered cut can be performed. Further, when a lever 21 provided on the connecting member 5 is operated and the arm 6 is tilted to the left side, the main body 7 is also tilted to the left side by following the tilting of the arm 6 to thereby change the angle of the saw blade 9 from the vertical direction. Therefore, a bevel cutting is available, in which the saw blade 9 is tilted from the vertical direction with respect to the upper surface of the turntable 4.

At each of the right and left side portions 3 of the base 2, there is provided a jig for the mitre circular sawing machine (hereinafter simply referred to as a "jig") 30. The jig 30 comprises a holder 31 as an attachment member, attached to the side surface of the side portion 3, a work support 32 as a stopper plate, attached to the holder 31, and a sub-work support 33 as an auxiliary stopper plate, connected to the work support 32. Since both jigs 30 are substantially bilaterally symmetrical except for the sub-work supports 33, description will be mainly given to the left-side jig 30.

The holder 31 is formed by bending a metal rod member into a U-shaped configuration as viewed from top, and the holder 31 can be attached to the side portion 3 at a position lower than and parallel to the upper surface of the side portion 3 by inserting both end portions 34 thereof into corresponding attachment holes (not shown) formed in the side surface of the side portion 3. Further, an adjusting screw 36 is threadedly engaged with and vertically extending from a center portion of a proximal portion 35 of the holder 31, so that by screwing the adjusting screw 36 into the proximal portion 35 the adjusting screw 36 can protrude from the upper surface of the proximal portion 35.

Further, the work support 32 is connected to the end portions 34 of the holder 31 through front and rear links 37, 37. The link 37 has a center long hole 38 at one end portion, and by a threaded shaft 39 penetrating through the long holes 38 of the front and rear links 37 and the end portions 34, the links 37 are rotatable as well as movable in the longitudinal direction within the long holes 38 with respect to the end portions 34. The reference number 40 indicates a finger screw threadedly engaged with a distal end of the threaded shaft 39 at the front side of the front link 37, and the links 37 can be fixed to the end portions 34 by screwing the finger screw 40. At an end portion of each link 37 opposite to the side where the long hole 38 is provided, there is provided a screw 41 which can rotatably connect the link 37 and the proximal end of the work support 32.

The work support 32 is a plate member which can be placed on the upper surface of the side portion 3 at the front side of the guide fence 11, and when the work support 32 is rotated toward the side portion 3 while being positioned in an upper limit position of the links 37 where the threaded shaft 39 is positioned in a lower end of the long holes 38, as seen in FIGS. 1 and 2, the work support 32 is set on the upper surface of the side portion 3 into a stopper plate position. On the contrary, when the work support 32 is rotated outside (i.e., toward the opposite side of the side portion 3) while being positioned in a lower limit position of the links 37 where the threaded shaft 39 is positioned in an upper end of the long holes 38, as seen in FIGS. 3 and 4, the work support 32 is set on the upper surface of the holder 31 into a retreating position. The thickness of the work support 32 is set the same as that of a step height between the upper surface of the side portion 3 and the upper surface of the holder 31, so that that surface of the work support 32 which faces above in the retreating position lies flush with the upper surface of the side portion 3.

Further, in the stopper plate position, the distal end of the work support 32 has a slant surface which gradually slants and extends toward a center of the work support 32 in accordance with the maximum angle when tilting the main body 7 to the left side for a beveled cut (i.e., in the position after rotation of 45 degrees from the right angle position with respect to the guide surface 15).

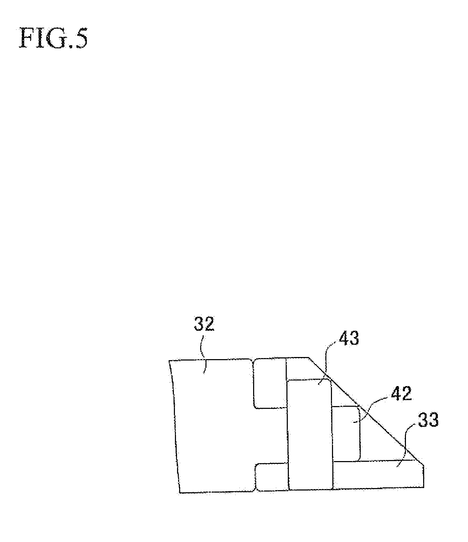

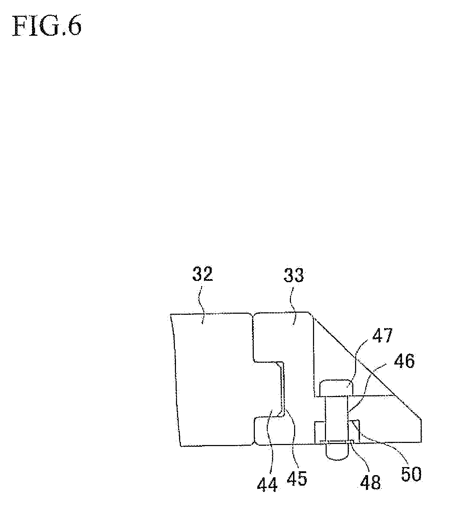

The sub-work support 33 is a rod-like member having the same thickness as that of the work support 32, and as seen in FIG. 5, the sub-work support 33 is horizontally rotatably connected by a vertical pin 43 to a connecting piece 42 that protrudes from a distal end of a slant end edge of the work support 32. As seen in FIG. 6, a protrusion 44 continued from the connecting piece 42 is formed at the slant end edge of the work support 32, and a groove 45 into which the protrusion 44 is fitted is formed on the sub-work support 33 at the side surface of the slant end edge of the work support 32. Accordingly, in an adjacent position where the sub-work support 33 conforms to the slant end edge of the work support 32, the sub-work support 33 can be integrated with the work support 32 by the fitting engagement between the protrusion 44 and the groove 45.

At a free end of the sub-work support 33, there is provided a guide hole 46 extending along a longitudinal direction of the sub-work support 33, and a headed pin 47 as an engagement portion is disposed in the guide hole 46 in such a manner as to be slidable along the guide hole 46. As seen in FIG. 6, the headed pin 47 can protrude downward from the lower surface of the sub-work support 33 in the stopper plate position by means of the head of the headed pin 47 and a clip 48 provided at a lower end of the headed pin 47, and by inserting the headed pin 47 into a bottomed hole 49 formed near an outer edge of the blade edge plate 18 on the turn table 4 for engagement with each other, the headed pin 47 turns in accordance with a rotation of the turntable 4 and by following the movement of the blade edge plate 18.

As shown by the two-dot chain line in FIG. 2, as the headed pin 47 turns, the sub-work support 33 horizontally rotates away from the slant end edge of the work support 32 by the sliding movement of the headed pin 47 within the guide hole 46. Therefore, the sub-work support 33 can always keep a predetermined position relative to the slit 19. In this embodiment, the left-side sub-work support 33 is configured such that a side surface thereof facing to the blade edge 9 is obliquely cut in order to avoid interference during the beveled cut. However, in the case where the main body 7 is tilted both to right and left directions, the right-side sub-work support 33 also has an oblique cut similar to that of the left-side sub-work support 33. On the contrary, in the case of a circular sawing machine without providing a function for a beveled cut, both the right and left sub-work supports 33 may be configured such that the side surfaces thereof facing the blade edge 9 are cut at right angle with the upper surface of the turntable 4.

According to the mitre circular sawing machine 1 configured as described above, when the jig 30 attached to the base 2 is used as a stopper, as seen in FIGS. 1 and 2, the work support 32 is rotated onto the upper surface of the side portion 3 into the stopper plate position, and then the finger screw 40 is screwed to fix the front and rear links 37, 37 in the upper limit position. Accordingly, the work support 32 is set on the upper surface of the side portion 3 so as to extend in the right-and-left direction and partly cover the upper surface of the turntable 4. During this time, the sub-work support 33 is also rotated and set on the upper surface of the turntable 4. If the sub-work support 33 is horizontally rotated toward the blade edge plate 18 for positioning the headed pin 47 into the bottomed hole 49, the headed pin 47 drops by its own weight and the lower end of the headed pin 47 is inserted into the bottomed hole 49. Therefore, the sub-work support 33 can be fixed in the predetermined position relative to the slit 19. This can be said to both the right and left jigs 30. However, only one of the jigs 30 may have such a configuration.

Next, a workpiece W is set on the right and left work supports 32, 32 extending over these work supports 32, 32, and the workpiece W is pressed and positioned against the guide surface 15 of the guide fence 11. This makes it possible to support the workpiece W in an upper position that is above the side portions 3 and the upper surface of the turntable 4. If the operator holds the handle 10 and lowers the main body 7 while rotating the saw blade 9, the workpiece W can be cut at right angle with the guide surface 15 between the right and left sub-work supports 33, 33.

Meanwhile, during a mitered cut, the sub-work support 33 rotates by following the rotation of the turntable 4, so that the sub-work support 33 always keeps a position that is closer to the slit 19. This makes it possible to support a workpiece W at a position closer to the saw blade 9 and thus to realize a stable cut. Of course, if the main body 7 is tilted to the left-side for a beveled cut, the main body 7 does not interfere with the sub-work support 33.

It is noted that whether the sub-work support 33 is used or not is an optional, and in accordance with the size, etc. of a workpiece W, the workpiece W may be set in a position where the sub-work support 33 conforms to the slant end edge of the work support 32 and cut without inserting the headed pin 47 into the bottomed hole 49.

On the contrary, in the case of cutting an elongated workpiece W, as seen in FIGS. 3 and 4, the work support 32 is rotated into the retreating position, outside the side portion 3. During this time, whether or not the link 37 is fixed using the finger screw 40 is an optional. In this retreating position, the work support 32 is supported on the upper surface of the holder 31 parallel to the holder 31, and the upper surface of the work support 32 lies flush with the upper surface of the side portion 3. If an error is present between the upper surface of the side portion 3 and the upper surface of the work support 32, the adjusting screw 36 on the holder 31 can be rotated to adjust the height of the work support 32. Accordingly, the elongated workpiece W can be set using the right and left work supports 32, 32 to thereby realize a stable cut.

During this time, the sub-work support 33 is also rotated outside and positioned such that the upper surface thereof lies flush with the upper surface of the work support 32. Therefore, the upper surface of the sub-work support 33 also assists the work support 32 to support the workpiece W. In the case where the size of the workpiece W is too long, as shown by the two-dot chain line in FIG. 4, the sub-work support 33 can be rotated outside from the position where the sub-work support 33 conforms to the slant end edge of the work support 32 to a position where the upper surface of the sub-work support 33 extends further outward and away from the work support 32, so that a supporting surface for the workpiece W can be extended in the right-and-left direction. Therefore, an elongated workpiece W can be set without any difficulty. It is noted that the headed pin 47 drops by its own weight when the sub-work support 33 is rotated outside; however, since a long groove 50 having a sufficiently large width is formed in the upward facing surface of the sub-work support 33 along the guide hole 46, as seen in FIGS. 3 and 4, the headed pin 47 drops until the clip 48 comes into engagement with the bottom surface of the long groove 50. Therefore, the headed pin 47 does not protrude upward from the upper surface of the sub-work support 33.

As described above, according to the jig 30 and the miter circular sawing machine 1 in the above first embodiment, the jig 30 comprises: the holder 31 configured to be attached to the side surface of the base 2 of the mitre circular sawing machine 1; and the work support 32 configured to be connected to the holder 31, and in a state in which the holder 31 is attached to the base 2, to be movable between the stopper plate position where the work support 32 is placed on the base 2 and the upper surface of the work support 32 becomes parallel to the upper surface of the base 2 and the retreating position where the work support 32 retreats outside the base 2. Therefore, the work support 32 can be used as a stopper without requiring time and a complicated operation. Further, since whether the work support 32 is used or unused can be chosen while the work support 32 is kept attached to the base 2, the work support 32 would not be lost and thus excels in the usability.

Particularly, in this embodiment, there is provided the sub-work support 33 configured such that the upper surface thereof lies flush with the upper surface of the work support 32 in the stopper plate position, and the sub-work support 33 is connected to the work support 32 in such a manner as to be movable between the adjacent position where the sub-work support 33 is adjacent to the work support 32 and the protruding position where the sub-work support 33 is away from the work support 32. Therefore, it is possible to support a workpiece W using the sub-work support 33 at a position closer to the saw blade 9, and a high cutting accuracy can be maintained even when the work support 32 is used.

Further, the sub-work support 33 is provided with the headed pin 47 engageable with the upper surface of the turntable 4 which is horizontally rotatably mounted on the base 2 so that the sub-work support 33 is movable by following the rotation of the turntable 4. Therefore, it is possible to support a workpiece W by the sub-work support 33 during a mitered cut without changing the position with respect to the saw blade 9. This can maintain a better cutting accuracy.

Further, the work support 32 is configured such that in the retreating position, the upper surface of the work support 32 lies flush with the upper surface of the side portion 3 of the base 2. Therefore, the work support 32 can be used for supporting a workpiece W outside the base 2, so that if the workpiece W is elongated to such an extent that it protrudes from the base 2, the workpiece W can be reliably positioned using the work support 32.

In addition, the holder 31 is horizontally attached to the side surface of the base 2 such that the upper surface of the holder 31 is positioned lower than the upper surface of the base 2 by the thickness of the work support 32, and in the retreating position, the work support 32 is set on the holder 31 so that the upper surface of the work support 32 lies flush with the upper surface of the base 2. Therefore, the work support 32 having moved into the retreating position is automatically set to the same height as the base 2 and can support a workpiece W. This can improve the usability.

Further, the adjusting screw 36 is threadedly engaged with the holder 31 so that the work support 32 in the retreating position is brought into contact with the adjusting screw 36 to thereby adjust the height of the work support 32. Therefore, it is possible to accurately align the work support 32 in the retreating position with the upper surface of the base 2.

In the first embodiment, the jig is attached to the right and left sides of the base, respectively. However, the jig may be attached to one of the right and left sides.

Further, the configuration of the stopper plate is not limited to the work support as described above. In the case of a jig used for a miter circular sawing machine without performing a beveled cut, it is not necessary to provide the slant end edge on the work support. The connection between the stopper plate and the holder may be modified; for example, the connection is made inside the both end portions of the holder. Similarly, the auxiliary stopper plate may be modified. For example, in the case of the miter circular sawing machine without the turntable, the auxiliary stopper plate may be slidable in the right-and-left direction with respect to the stopper plate. Of course, the auxiliary stopper plate may be omitted.

Meanwhile, the attachment member may be a plate-like member other than the U-shaped holder as described above. However, the miter circular sawing machine has an existing attachment hole and by inserting a distal end of a support holder that is bent upward while adjusting the distal end of the support holder with respect to the upper surface of the side portion, the support holder is attached to the mitre circular sawing machine. In this configuration, the existing attachment hole for the attachment of the support holder may be advantageously used for the attachment of the U-shaped holder.

Further, in the above embodiment, when the work support is in the retreating position, a workpiece is supported outside the base. However, it is not necessary to support the workpiece outside the base. For example, it is conceivable that the jig is simply configured for evacuating the workpiece from the stopper plate position to a position outside the base.

Other than the above, the jig according to the present invention may be applicable to other types of miter circular sawing machines as described above, such as a type including a non-tiltable main body, a type without a turntable, and a slide type having a main body slidable in the front-and-rear direction.

### [Second Embodiment]

Another embodiment of the present invention will be described with reference to the accompanying drawings.

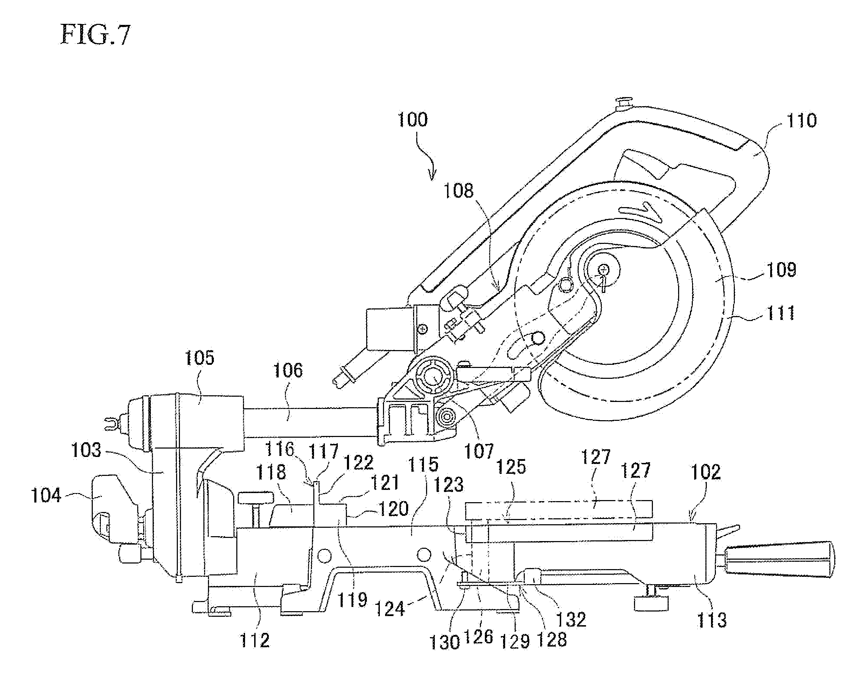

FIG. 7 is a side elevation of a slide type circular saw as an example of a mitre circular sawing machine, and a slide type circular saw 100 comprises: a base 102; an arm 103 with a lever 104 connected to a rear end of the base 102 (left-side of FIG.7 is defined as a rear-side) in such a manner as to be rotatable in the right-and-left direction as well as to be fixed at an arbitrary angle; tubular holders 105 provided at an upper end of the arm 103; a pair of poles 106 loosely inserted into the tubular holders 105 so as to be slidable in the front-and-rear direction; a support shaft 107 provided at a front end of the poles 106; and a main body 108 connected to the poles 106 through the support shaft 107 so as to be rotatable in the up-and-down direction. The main body 108 has a disc-shaped saw blade 109 that is driven to rotate by a motor (not shown), and in a normal state, the main body 108 is urged and retained in an upper limit position shown in FIG. 7 by a torsion spring (not shown) provided at the support shaft 107. The reference numbers 110 and 111 indicate a handle and a safety cover, respectively.

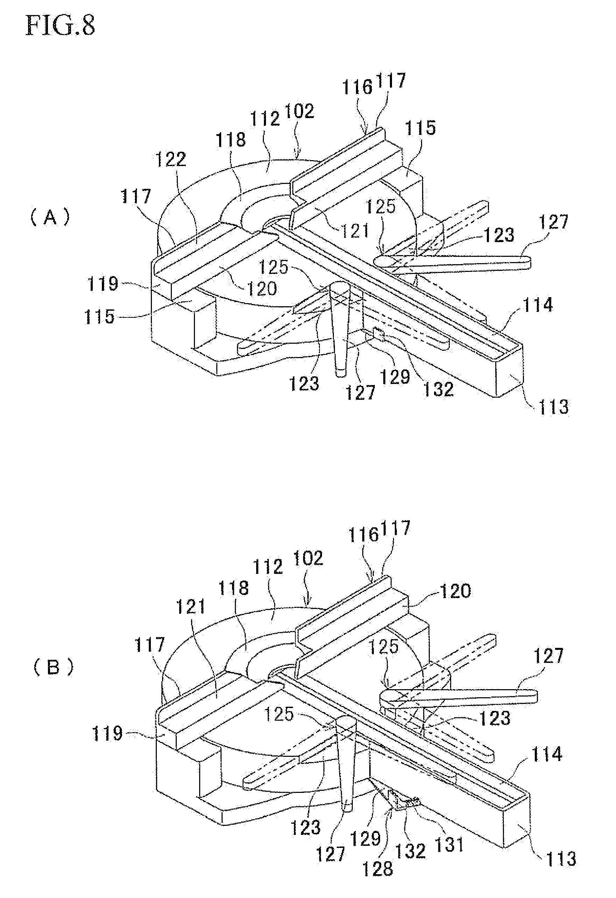

As seen in FIG. 8(A), a turn base 112 is rotatably mounted on the base 102 at a center of the base 102. The turn base 112 has a circular configuration as viewed from top, and an extension 113 extending in a radial direction of the turn base 112 protrudes from a side surface at a front-end of the turn base 112. A blade edge plate 114 is provided on the upper surface of the extension 113 and the upper surface of the turn base 112 in a manner extending from the extension 113 to the center of the turn base 112. The arm 103 is connected at the rear surface of the turn base 112.

Further, placement portions 115 are provided at right and left sides of the turn base 112 such that upper surfaces thereof lie flush with each other, and a guide fence 116 is provided on the placement portion 115 across the base 102. The guide fence 116 comprises a pair of right and left guide portions 117, 117, and a semi-circular detouring portion 118 configured to detour around the blade edge plate 114 at the rear of the blade edge plate 114 and to connect the right and left guide portions 117, 117. Provided at a front-side lower portion of each guide portion 117 is a stepped portion 119 which includes a lower guide surface 120 perpendicular to the upper surface of the turn base 112, and a placement surface 121 parallel to the upper surface of the turn base 112. Further, an upper guide surface 122 parallel to the lower guide surface 120 is formed at the front side of each guide portion 117 and above the stepped portion 119.

A recessed portion 123 is formed at the front-side of the turn base 112 and at both right and left sides of the blade edge plate 114. Each recessed portion 123 is cut such that a rear surface thereof extends in the right-and-left direction and a side surface thereof near its center continues with the side surface of the extension 113 and extends in the front-and-rear direction, and an auxiliary base 125 is provided in each recessed portion 123. The auxiliary base 125 includes a rod 126 loosely inserted into a through-hole 124 that is formed in the turn base 112 within the recessed portion 123, and a thin plate-like tapered swing arm 127 having a proximal end connected to the upper end of the rod 126 and the thickness thereof being the same as the depth of the recessed portion 123, so that the swing arm 127 is rotatable around the rod 126. In a normal state of the auxiliary base 125, the auxiliary base 125 is positioned by its own weight in a lowered position where the swing arm 127 is placed on a bottom surface of the recessed portion 123, allowing the rod 126 to penetrate through and protrude from the lower end of the through-hole 124. In this state, the upper surface of the swing arm 127 lies flush with the upper surface of the turn base 112.

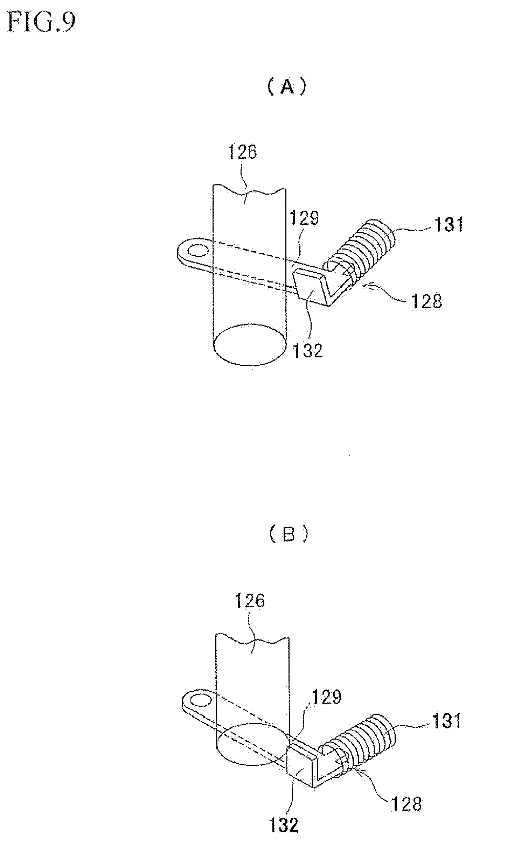

Meanwhile, a stopper mechanism 128 is provided at a lower surface of the turn base 112. The stopper mechanism 128 includes a plate-like stopper 129 having one end horizontally rotatably connected to the lower surface of the turn base 112 by a screw 130 so that a distal end of the stopper 129 protrudes from the turn base 112, and a coil spring 131 as an urging means for urging the stopper 129 outside the turn base 112 (i.e., in a direction away from the extension 113). Because of this coil spring 131, the stopper 129 comes into contact with an engagement projection (not shown) provided on the lower surface of the turn base 112 and is urged to an engagement position across a lower extension of the through-hole 124. However, when the auxiliary base 125 is in the lowered position, as seen in FIG. 9(A), a rotation of the stopper 129 is restricted in a retreating position where the stopper 129 comes into contact with the side surface of the rod 126 that protrudes downward from the through-hole 124.

If the auxiliary base 125 is pulled upward from the lowered position to release the rotation restriction of the stopper 129 by means of the rod 126, as seen in FIG. 9(B), the stopper 129 rotates to the engagement position and closes the lower surface of the through-hole 124. In this position, if the operator releases his hand from the auxiliary base 125, as shown in FIG. 8(B), the auxiliary base 125 is rested as the rod 126 comes into contact with the upper surface of the stopper 129 to restrict the downward movement of the rod 126, so that the swing arm 127 is held in a protruding position and protrudes upward from the upper surface of the turn base 112. In this protruding position, the upper surface of the swing arm 127 lies flush with the placement surface 121 of the guide fence 116. The reference number 132 indicates an operation strip formed by bending a distal end of the stopper 129 in the upward direction.

According to the slide type circular saw 100 configured as described above, a workpiece is placed on the upper surface of the turn base 112. The operator holds the handle 110 and lowers the main body 108, while pressing and positioning the workpiece W against the lower guide surface 120 of the guide fence 116, so that the workpiece can be cut by the rotating saw blade 109.

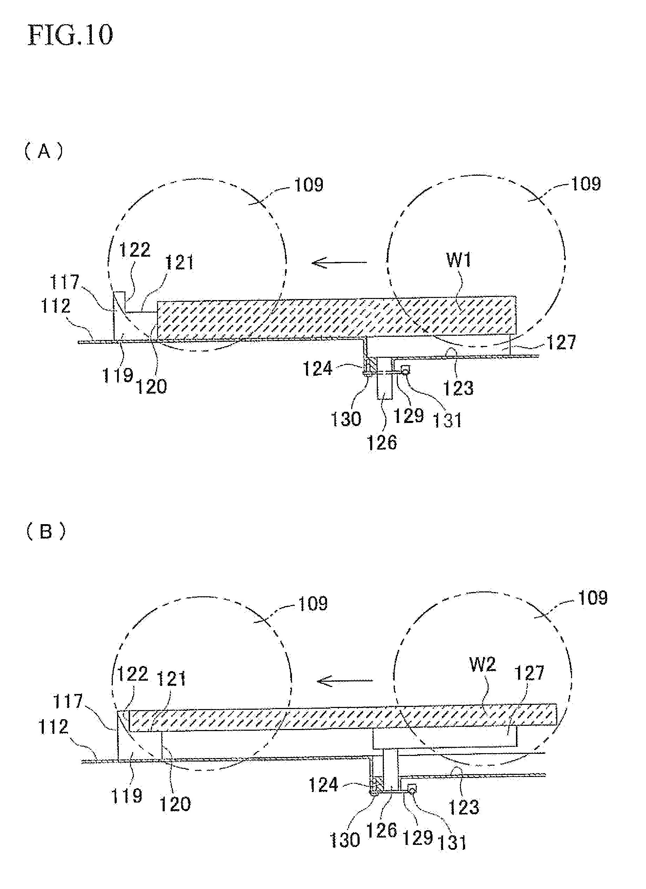

If a workpiece W1 has a large width in the front-and-rear direction, as seen in FIG. 10(A), the operator first slides the main body 108 in the forward direction and then lowers the same to cut a front end portion of the workpiece W1 and thereafter moves the main body 108 in the backward direction. Accordingly, as shown by the arrow, the saw blade 109 moves backward together with the main body 108, so that the workpiece W1 can be cut. During this time, since the swing arms 127 of the auxiliary base 125 are horizontally rotatable within the recessed portion 123 in a range of substantially 90 degrees as shown by the two-dot chain lines in FIG. 8(A), the workpiece W1 can be reliably supported even at its front end portion by changing the orientation of each swing arm 127 in accordance with the size of the workpiece W1.

In the case of a workpiece W2 having a much larger width in the front-and-rear direction, as seen in FIGS. 8(B) and 10(B), the operator pulls the auxiliary base 125 upward so that the stopper 129 moves to the engagement position as described previously to thereby retain the auxiliary base 125 in the protruding position. Therefore, the workpiece W2 can be placed on the placement surfaces 121 of the guide fence 116 and the upper surfaces of the swing arms 127 bridging the turn base 112 while being horizontally supported at a position higher than the upper surface of the turn base 112, and positioning can be performed by pressing the workpiece W2 against the upper guide surface 122. If a slide cut is carried out in this position of the workpiece W2, the workpiece W2 can be cut by the saw blade 109 using a portion near the center of the saw blade 109 (i.e., a portion having a longer length in the front-and-rear direction). Therefore, the workpiece W2 can be cut by sliding the saw blade 109 substantially in the same stroke as that shown in FIG. 10(A). Of course, by changing the orientation of each swing arms 127 where necessary as shown by the two-dot chain line in FIG. 8(B), the workpiece W2 can be stably supported even at its front end portion.

On the contrary, when the auxiliary base 125 is returned from the protruding position to the lowered position, the stopper 129 is pressed toward the extension 113 against the urging force of the coil spring 131 by way of the operation strip 132. This can cause the stopper 129 to retreat from the lower extension of the through-hole 124, and the auxiliary base 125 to drop by its own weight into the lowered position, so that the swing arm 127 is placed on the bottom surface of the recessed portion 123. In this position, if the operator releases his hand from the stopper 129, the stopper 129 rotates to the retreating position and comes into contact with the side surface of the rod 126 that is protruding downward from the through-hole 124.

In the case of a mitered cut where a cutting operation is carried out other than the right angle as viewed from top, i.e., at which the saw blade 109 becomes orthogonal to the guide fence 116 as viewed from top, the turn base 112 can be horizontally rotated using a grip (see FIG. 7) provided on the front surface of the extension 113. This makes it possible to horizontally rotate the main body 108 together with the turn base 112 while retaining the guide fence 116 and the workpiece as they are, so that a mitered cut can be performed at any desired angles in both cases such as shown in FIGS. 10(A) and 10(B). Further, in the case of a beveled cut where a cutting operation is carried out other than the right angle as viewed from front, i.e., at which the saw blade 109 comes to be perpendicular to the upper surface of the turn base 112 as viewed from front, the arm 103 can be rotated using the lever 104. This makes it possible to tilt the main body 108, so that a beveled cut can be performed at any desired angles in both cases such as shown in FIGS. 10(A) and 10(B).

As described above, the slide type circular saw 100 according to the second embodiment comprises: the base 102; the auxiliary base 125 operable to move from the lowered position where the upper surface of the auxiliary base 125 lies flush with the upper surface of the base 102 to the protruding position where the upper surface of the auxiliary base 125 is positioned above the upper surface of the base 102; and the stopper mechanism 128 capable of retaining the auxiliary base 125 in the protruding position. Therefore, the stopper function can be easily obtained where necessary using the auxiliary base 125. This can lead to a better usability. Further, since there is no need for detaching the auxiliary base 125, it is unnecessary to store the auxiliary base 125 and thus the auxiliary base 125 would not be lost.

In particular, the auxiliary base 125 comprises a rod 126 configured to be movable in the up-and-down direction as well as rotatable within the recessed portion 123 formed on the base 102, and the swing arm 127 having one end connected to the upper end of the rod 126 such that in the lowered position, the upper surface of the swing arm 127 lies flush with the upper surface of the base 102 within the recessed portion 123, whereas in the protruding position, the upper surface of the swing arm 127 is positioned above the upper surface of the base 102. Therefore, the swing arm 127 can be rotated in an arbitrary orientation in accordance with the shape or size of a workpiece to thereby stably support the workpiece. This can further improve the usability.

Further, the guide fence 116 for positioning a workpiece is provided on the base 102 and extending across the base 102 in the right-and-left direction, and the guide fence 116 includes the stepped portion 119 having the upper surface that lies flush with the upper surface of the auxiliary base 125 positioned in the protruding position, so that the workpiece can be placed on the auxiliary base 125 and the stepped portion 119 bridging the base 102. Therefore, it is possible to more stably support the workpiece above the base 102 using the guide fence 116.

The auxiliary base is not limited to the one described in the above embodiment. For example, the upper end of the rod may be connected to a plate-like portion that conforms to the shape of the recessed portion, and the plate-like portion simply moves in the vertical direction without rotating from the lowered position where the plate-like portion is fitted into the recessed portion to the protruding position where the plate-like portion moves upward. Further, the pair of right and left auxiliary bases may be connected to each other within the base so that they are synchronously movable in the vertical direction. Of course, it is not necessary to provide a pair of right and left auxiliary bases, and only one of the auxiliary bases may be provided. The installation positions of the recessed portion and the auxiliary base are not limited to the front-side of the turn base, and may be changed to the side part or the center part of the turn base.

Further, it is not necessary to provide the auxiliary base within the recessed portion formed on the turn base. For example, the auxiliary base may protrude from the side surface of the placement portion formed on the turn base or the base and be movable in the vertical direction.

Meanwhile, the design of the stopper mechanism may be changed where appropriate. For example, a protrusion may be formed on the side surface of the rod, and this protrusion is engageable with a cutout continuing from the through-hole so as to retain the rod in the protruding position.

Further, it is not necessary to provide the stepped portion on the guide fence for supporting a workpiece on the stepped portion and the auxiliary base bridging the turn base. For example, the stepped portion of the guide fence may be omitted and the workpiece may be supported only by the auxiliary base in the protruding position.

Furthermore, according to the above second embodiment, the auxiliary base is provided on the turn base. However, the auxiliary base may be provided on the placement portion. Further, the structure of the mitre circular sawing machine per se is not limited to the one disclosed in the above embodiment. Accordingly, in the case of a mitre circular sawing machine without a turn base, the recessed portion may be directly formed on the base for installation of the auxiliary base. The present invention is also applicable to a mitre circular sawing machine of the type where the main body is not slidable.

### BRIEF DESCRIPTION OF THE DRAWINGS

FIG. 1 is a front elevation of a mitre circular sawing machine according to a first embodiment, in which a jig is in a stopper plate position.
FIG. 2 is a top view of the mitre circular sawing machine according to the first embodiment, in which the jig is in the stopper plate position.
FIG. 3 is a front elevation of the mitre circular sawing machine according to the first embodiment, in which the jig is in a retreating position.
FIG. 4 is a top view of the mitre circular sawing machine according to the first embodiment, in which the jig is in the retreating position.
FIG. 5 is an explanatory view of a connecting portion of a sub-work support according to the first embodiment.
FIG. 6 is an explanatory view of a distal end portion of the sub-work support according to the first embodiment.
FIG. 7 is a side elevation of a slide type circular saw according to a second embodiment.
FIG. 8 are perspective views merely showing a base according the second embodiment, in which (A) shows an auxiliary base in a lowered position, and (B) shows the auxiliary base in a protruding position.
FIG. 9 are explanatory views of a stopper mechanism according the second embodiment, in which (A) shows a stopper in a retreating position, and (B) shows the stopper in an engagement position.
FIG. 10 are explanatory views for explaining a slide cut according the second embodiment, in which (A) shows the auxiliary base in the lowered position, and (B) shows the auxiliary base in the protruding position.

### EXPLANATION OF REFERENCE NUMERALS

1 -- MITRE CIRCULAR SAWING MACHINE, 2 -- BASE, 3 -- SIDE PORTION, 4 -- TURNTABLE, 7 -- MAIN BODY, 9 -- SAW BLADE, 11 -- GUIDE FENCE, 12 -- LEFT FENCE, 13 -- RIGHT FENCE, 15 -- GUIDE SURFACE, 18BLADE EDGE PLATE, 19 -- SLIT, 30 -- JIG FOR MITRE CIRCULAR SAWING MACHINE, 31 -- HOLDER, 32 -- WORK SUPPORT, 33 -- SUB-WORK SUPPORT, 36 -- ADJUSTING SCREW, 37 -- LINK, 40 -- FINGER SCREW, 43 -- PIN, 44PROTRUSION, 45 -- GROOVE, 46 -- GUIDE HOLE, 47 -- HEADED PIN, 100SLIDE TYPE CIRCULAR SAW, 102 -- BASE, 103 -- ARM, 107 -- SUPPORT SHAFT, 108 -- MAIN BODY, 109 -- SAW BLADE, 112 -- TURN BASE, 113EXTENSION, 114 -- BLADE EDGE PLATE, 116 -- GUIDE FENCE, 117 -- GUIDE PORTION, 119 -- STEPPED PORTION, 120 -- LOWER GUIDE SURFACE, 121PLACEMENT SURFACE, 122 -- UPPER GUIDE SURFACE, 123 -- RECESSED PORTION, 124 -- THROUGH-HOLE, 125 -- AUXILIARY BASE, 126 -- ROD, 127SWING ARM, 128 -- STOPPER MECHANISM, 129 -- STOPPER, 131 -- COIL SPRING

## Claims

1. A jig for a mitre circular sawing machine comprising:
an attachment member configured to be attached to a side surface of a base of the mitre circular sawing machine; and
a stopper plate configured to be connected to the attachment member, and in a state in which the attachment member is attached to the base, to be movable between a stopper plate position where the stopper plate is placed on the base and an upper surface of the stopper plate comes to be parallel to an upper surface of the base and a retreating position where the stopper plate retreats outside the base.

2. The jig for a mitre circular sawing machine according to claim 1, wherein an auxiliary stopper plate is provided being configured such that an upper surface thereof lies flush with the upper surface of the stopper plate in the stopper plate position, and wherein the auxiliary stopper plate is connected to the stopper plate in such a manner as to be movable between an adjacent position where the auxiliary stopper plate is adjacent to the stopper plate and a protruding position where the auxiliary stopper plate is away from the stopper plate.

3. The jig for a mitre circular sawing machine according to claim 2, wherein the auxiliary stopper plate is provided with an engagement portion engageable with an upper surface of a turntable which is horizontally rotatably mounted on the base so that the auxiliary stopper plate is movable by following a rotation of the turntable.

4. The jig for a mitre circular sawing machine according to any one of claims 1 to 3, wherein the stopper plate is configured such that in the retreating position, the upper surface of the stopper plate lies flush with the upper surface of the base.

5. The jig for a mitre circular sawing machine according to claim 4, wherein the attachment member is horizontally attached to the side surface of the base such that the upper surface of the attachment member is positioned lower than the upper surface of the base by a thickness of the stopper plate, and wherein in the retreating position, the stopper plate is set on the attachment member so that the upper surface of the stopper plate lies flush with the upper surface of the base.

6. The jig for a mitre circular sawing machine according to claim 5, wherein an adjusting screw is threadedly engaged with the attachment member so that the stopper plate in the retreating position is brought into contact with the adjusting screw to thereby adjust a height of the stopper plate.

7. The jig for a mitre circular sawing machine according to claim 1, wherein the attachment member is formed by bending a metal rod member into a U-shaped configuration as viewed from top, and the attachment member is attached to the side surface by inserting both end portions thereof into corresponding attachment holes formed in the side surface of the base.

8. The jig for a mitre circular sawing machine according to claim 7, wherein the stopper plate is connected to the both end portions of the rod member through a link and rotatable between the stopper plate position and the retreating position.

9. The jig for a mitre circular sawing machine according to claim 2, wherein the auxiliary stopper plate is horizontally rotatably connected to the stopper plate, and wherein in the adjacent position where the auxiliary stopper plate is adjacent to the stopper plate, a protrusion formed on an end edge of the stopper plate is fitted into a groove formed in an end edge of the auxiliary stopper plate so that the stopper plate and the auxiliary stopper plate are integrated with each other.

10. A mitre circular sawing machine comprising:
a base;
a main body disposed above the base in such a manner as to be movable in an up-and-down direction and having a motor-driven rotatable saw blade; and
a jig for a mitre circular sawing machine according to claim 1, wherein the jig is attached to at least one of right and left side surfaces of the base.

11. A mitre circular sawing machine comprising:
a base;
a main body having a motor-driven rotatable saw blade and disposed above the base in such a manner as to be movable in an up-and-down direction so that a workpiece set on the base can be cut by lowering the main body; and
an auxiliary base provided on the base and operable to move from a lowered position where an upper surface of the auxiliary base parallel to the upper surface of the base is positioned equal to or lower than the upper surface of the base to a protruding position where the upper surface of the auxiliary base is positioned above the upper surface of the base.

12. The mitre circular sawing machine according to claim 11, wherein the base is provided with a stopper mechanism capable of retaining the auxiliary base in the protruding position.

13. The mitre circular sawing machine according to claim 11 or 12, wherein the auxiliary base comprises a rod configured to be movable in an up-and-down direction as well as rotatable within a recessed portion formed on the base, and a swing arm having one end connected to an upper end of the rod such that in the lowered position, an upper surface of the swing arm lies flush with the upper surface of the base within the recessed portion, whereas in the protruding position, the upper surface of the swing arm is positioned above the upper surface of the base.

14. The mitre circular sawing machine according to claim 11 or 12, wherein a guide fence for positioning a workpiece is provided on the base and extending across the base in a right-and-left direction, and wherein the guide fence includes a stepped portion having an upper surface that lies flush with the upper surface of the auxiliary base positioned in the protruding position, so that the workpiece can be placed on the auxiliary base and the stepped portion bridging the base.

15. The mitre circular sawing machine according to claim 13, wherein the recessed portion is formed on both right and left sides of a blade edge plate that is provided on the base at a front side portion of the base, and the auxiliary base is provided in each of the recessed portions.

16. The mitre circular sawing machine according to claim 12, wherein the stopper mechanism comprises a stopper horizontally rotatable at a lower surface of the base and urged by a coil spring toward an engagement position across a lower extension of a through-hole formed in the base through which the rod penetrates, and wherein in the lowered position of the auxiliary base, the stopper is in a retreating position and brought into contact with a side surface of the rod that is protruding downward from the through-hole to thereby restrict a rotation of the stopper.
